# EUROPEAN PATENT SPECIFICATION

(11) **EP 0 688 697 B1**
(45) Date of publication and mention of the grant of the patent: **14.04.1999**
(21) Application number: 95500087.2
(22) Date of filing: 20.06.1995
(51) Int. Cl.: B60R 13/02

(54) **Self-supporting roof with built-in fittings directly mountable upon vehicle roofs**
Selbsttragender Dachhimmel mit Aufsatzstücken für die unmittelbare Montage auf Kraftfahrzeugdächern
Toit autosupportant avec des pièces rapportées pour le montage direct sur des toits de véhicules

(30) Priority: 20.06.1994 ES 9401338
(43) Date of publication of application: 27.12.1995
(73) Proprietor: IRAUSA INGENIERIA, S.A., E-09007 Burgos (ES)
(72) Inventor: Alonso Cuesta, Jeronimo, E-Burgos (ES)
(74) Representative: Carpintero Lopez, Francisco

(56) References cited:
- EP-A- 0 170 086
- EP-A- 0 203 484
- EP-A- 0 346 157
- FR-A- 2 632 908
- US-A- 5 011 218
- US-A- 5 186 517

## Description

### OBJECT OF THE INVENTION

The present invention relates to a self-supporting roof for vehicles or the like, having all the internal fittings that are usually assembled on the said roofs, being altogether directly couplable onto the vehicle roof using clips, thereby substantially reducing the time of assembly or installation of the roofs, and improving the working conditions of the fitters. Such a self supporting roof is of the type disclosed e.g. in EP-A-0 346 157.

### BACKGROUND OF THE INVENTION

Vehicle roofs are usually internally lined with a packing that generally comprises a number of sheets or layers of various materials glued together, and hence are self-supporting and adapt well to the inner shape of the vehicle roof. Nowadays, the internal fittings as such, namely "parasols" (sunvisors), handles or hangers, are used to fix the said packing to the vehicle roof. These fittings, present in every vehicle, have respective fixing elements that are basically bolts crossing through the packing and in turn fixing the same firmly against the vehicle roof. That is to say, the packing is always arranged between the fittings and the bodywork, and therefore attachment of the fittings, using nuts and bolts provided to such end, will cause the packing to be held tight between the two.

In this widely used system, the roof packing and the fittings aforesaid are fixed by hand inside the vehicle, placing the self-supporting packing between the fittings and the bodywork and then fixing the set fittings using bolts, which operation is both slow and inconvenient for workmen given the little space there is inside vehicles, which means that fitting the same fully requires between six and eight minutes.

In addition to this, workmen are frequently injured due to the awkward positions they have to work in within the vehicle to fit the said roofs.

This is why motor car manufacturers would welcome a roof carrying all requisite fittings and having means for direct attachment in lieu of the usual lockscrews, in order for fitting, removal and replacement of components to be easier. The relevant roof must also be lightweight, conserve its self-supporting character and capacity to withstand loads, moreover allowing the same to be handled and mounted by only two workers.

In this sense Patent EP-0 346 157 describes a vehicle roof structure where the different internal accessories are fastened to the packing with different kinds of fastener devices, among which a wedged shaped clip stands out, from which clip lateral faces legs (154, 152) diverge, that provide the accessories fast assembly by simple introduction of the said clip in the corresponding housing that has been foreseen in the packing and in the vehicle structure.

The self-supporting roof subject of the invention fully solves the disadvantages described for current systems, moreover satisfying the necessary requirements, inasmuch as eliminating the need for the fittings to be mounted inside the vehicle, thereby reducing operations and working time inside the same.

### DESCRIPTION OF THE INVENTION

The roof subject hereof as defined in the claim has been devised to solve the problems aforesaid, simplifying mounting operations and optimising the time taken by such operations. To this end, the self-supporting roof is designed to reach the vehicle in which it is to be mounted with preassembled fittings, a clip being used in preassembling the fittings that on one side receives the screws locking the fittings on the self-supporting roof, and on the other stands as a clip-in means to fix the said roof to the bodywork where clip-receiving rectangular holes will naturally be provided.

The self-supporting roof is thus mounted directly on the bodywork, the bracing clips being insertable through the mouth of the relevant holes and pressed until clipped in. The clip has been designed to be easily arranged and inserted and for its tensile strength to be greater when clipped in than as generally required by vehicle manufacturers.

The number of clips to be used will be the same as the number of attachment points the fittings require in view of their characteristics, size or required tensile strength. Where no fittings are provided, the attachment points of the self-supporting roof use plastic clips of a known kind.

Furthermore, since the fittings are preassembled outside the production line or even outside the assembly plant, the number of parts held in stock and assembled at the very plant is substantially reduced. This is why operation tests can be carried out prior to assembly and indeed the preassembled systems can be sent to the production plant according to the vehicle production sequences.

The said attachment clips are made from steel strip and comprise a flat base having two slightly arched extensions and a pair of projections folded symmetrically inwards to form a sort of wedge, the side faces of the wedge having collapsible wings projecting outwards from the top edge and leading to a rounded free edge, the projections being meant for insertion, assisted by their wedge shape, through the mouth of receiving holes that are provided on the roof of the bodywork, wherein they are held by the wings that prevent their dislocation (clip effect).

The said wedge-like folded extensions have their top ends folded with the heads facing each other. The said clips moreover have a central hole receiving the bolts for assembling the fittings, either with the assistance of separating parts or directly.

It must be noted that the clip has two extensions at its base that usefully provide a good supporting surface for a better coupling to the fittings. The extensions are finally provided with holes that, together with studs provided on the separating parts or the fittings as such, help guide and position the said clips at the preassembly stage of the fittings on the self-supporting roof, and prevent the said fittings from turning once the roof is mounted on the bodywork of the vehicle.

The said clip extensions can finally be slightly arched in order to obtain a compression spring effect, once they have been inserted in the housings and tightly clipped in. The spring effect offsets any gap left by a faulty tightening of the screws locking the fittings.

Accordingly, when fitting the subject roof it is sufficient for the metal clips mentioned above to be simply pressed into holes provided to such end on the roof of the bodywork, which operation is fostered by the wedge-shape of the said clips. While the metal clip is passing through the mouth of the said holes, its wings are pushed by the very edge of the hole and collapse, subsequently being released upon surpassing the same to retrieve their usual position and lie with their end supported by the edge of the hole.

Attachment using bolts, that is difficult and slow to provide inside the vehicle, is therefore replaced by fastening with clips, that are coupled simply by pressing them against the roof of the vehicle.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
**Figure 1**.- Is a perspective of the self-supporting roof with all the preassembled fittings and the plurality of clips arranged to mount the assembly on the inside of the vehicle bodywork.

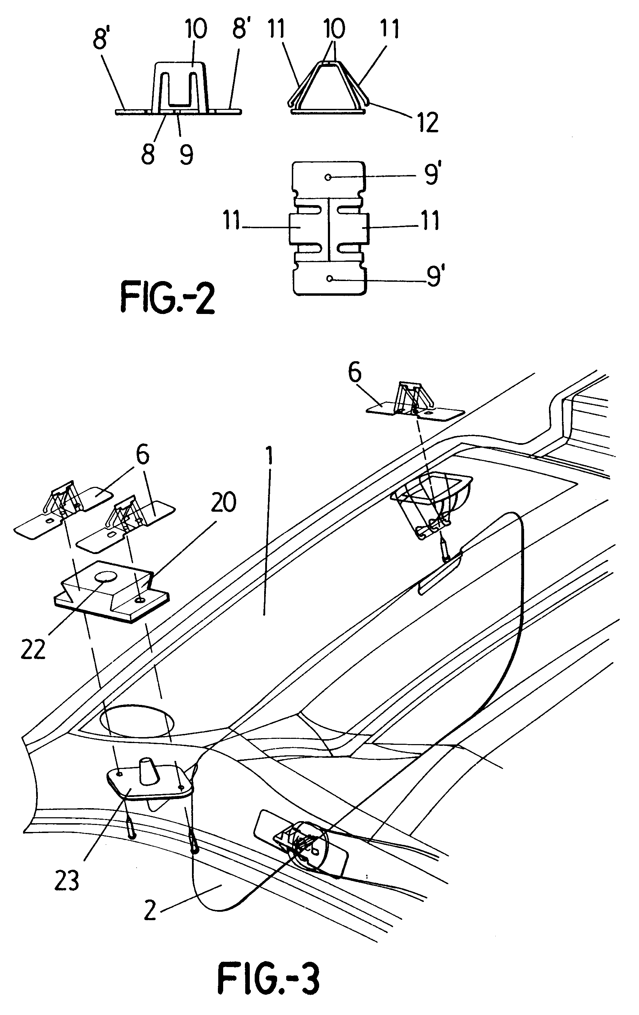

**Figure 2**.- Shows three views of the metal clip fixing the self-supporting roof.
**Figure 3.**- Is an enlarged perspective of the various elements used for preassembling the parasols to the packing, and the clips for fixing to the bodywork.
**Figure 4**.- Is an enlarged perspective of the various elements used for preassembling the handles to the packing, and the clips for fixing to the bodywork.
**Figure 5**.- Shows detailed sections of the various elements used to couple the hangers.
**Figure 6**.- Is a detailed section of the various elements used to fix the parasols to the packing, at their turning axis, showing the special manner in which the separating part is used.
**Figure 7**.- Is a detailed section of the conventional rear plastic clips.

### PREFERRED EMBODIMENT OF THE INVENTION

With reference to the figures it is clear that the subject roof comprises a packing (1) and a number of fittings, such as "parasols" (2) (sunvisors), handles (3), hangers (4) or passenger lights (5), preassembled on the said packing (1) in such a way that clips (6) are provided on the side assembled to the bodywork which receive the lockscrews of the fittings, and on the other side define the means for fixing the self-supporting roof on the bodywork. The points of attachment also comprise plastic clips (7) that are known per se.

The said anchoring metal clips (6) comprise a flat base (8) having a through hole (9), two slightly arched extensions (8') and two inwardly folded projections (10) lying facing each other to form a wedge, with outwardly diverging wings (11) on their sides leading to a rounded edge (12). These wings (11) are highly resistant but are also flexible enough to retract when sufficient force is applied, to reach the flat of the wedge as such, and return to their original position after surpassing the edge of the receiving hole.

The transverse extensions (8') also increase and improve the surface supporting the said clip (6) on the fitting. They can optionally be slightly arched to produce a spring effect capable of offsetting any gap or maladjustment that could result when tightening the lockscrews.

Now then, in order to mount the roof on the inside of a vehicle, once in the right position and with the various clips (6) facing the holes provided on the roof of the vehicle, pressure is exerted upon the clips (6) that move into the said holes easily due to their wedge form, the wings (11) giving way on being pressed against the side walls of the receiving holes, and returning to their position after surpassing their mouth. The clips are thus held still within their holes and with them so is the self-supporting roof.

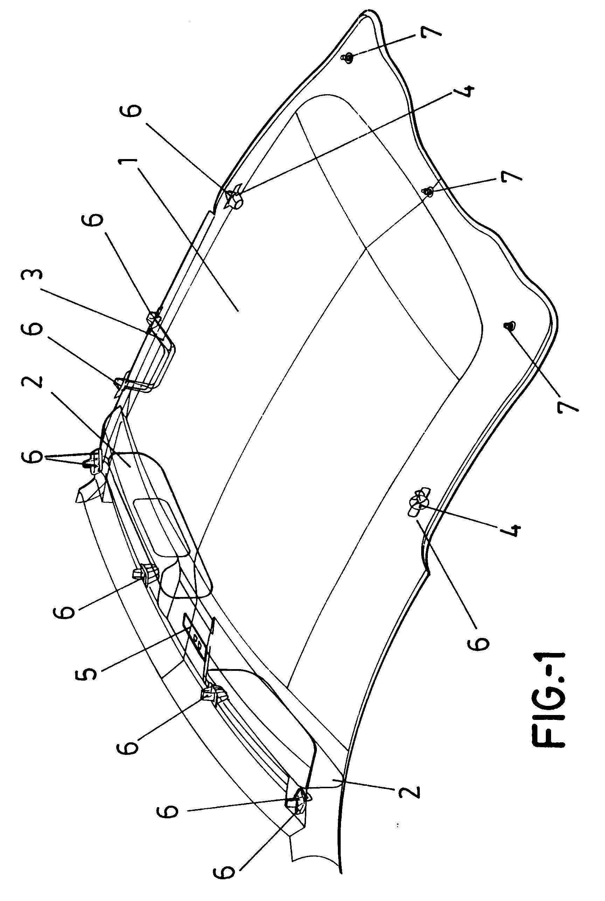

As shown in figure 1, in addition to the points to anchor the packing (1) that match the positions of the various fittings, plastic clips (7) that are per se known are used to fix the rear end of the roof, and likewise inserted in their respective housings.

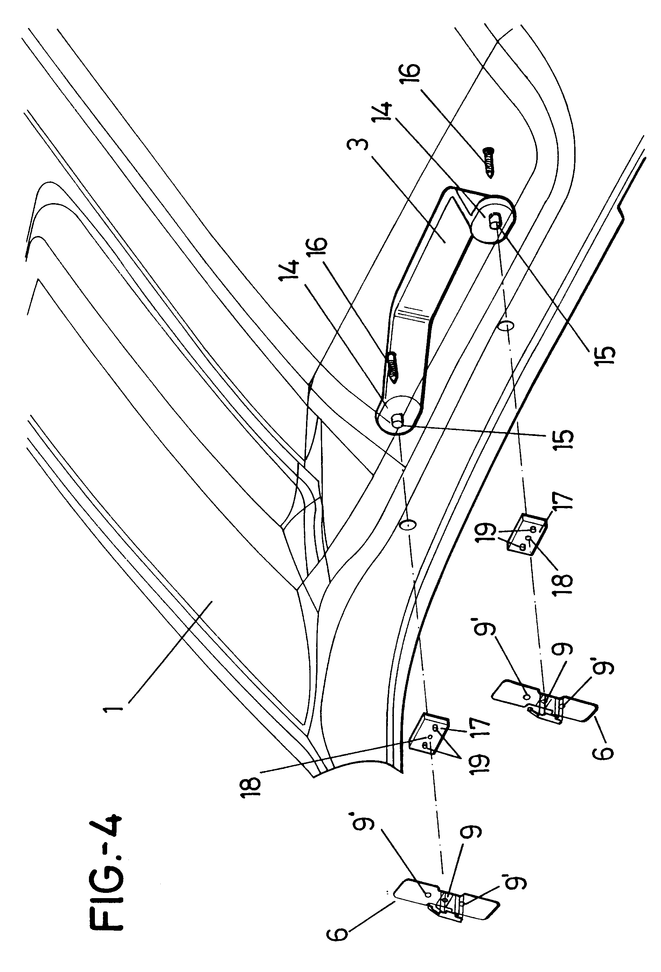

Now then, before mounting the subject roof onto the vehicle bodywork, the parts making up the roof, viz. packing and fittings, must be preassembled to make up a compact unit that is then carried to the mounting chain. Thus, for instance, when preassembling the handles, as shown in figure 4, the side that is visible inside the vehicle is provided with a handle (3) that has holes (15) at its two attachment extensions (14) for the passage of bolts (16), which bolts cross the packing (1) and a separating part (17) through the holes (18) and are fixed to the metal clips (6) at their central holes (9), thereby for the unit comprising the handle (3), packing (1), separating part (17) and clip (6) to be linked to each other. In order to expedite the bolting operation described, the clips (6) have holes (9') at their extensions (8') to house studs (19) provided on the separating parts or on the fittings as such, that help centre and position the parts with respect to one another and, after mounting the roof on the bodywork, prevent the fittings from turning.

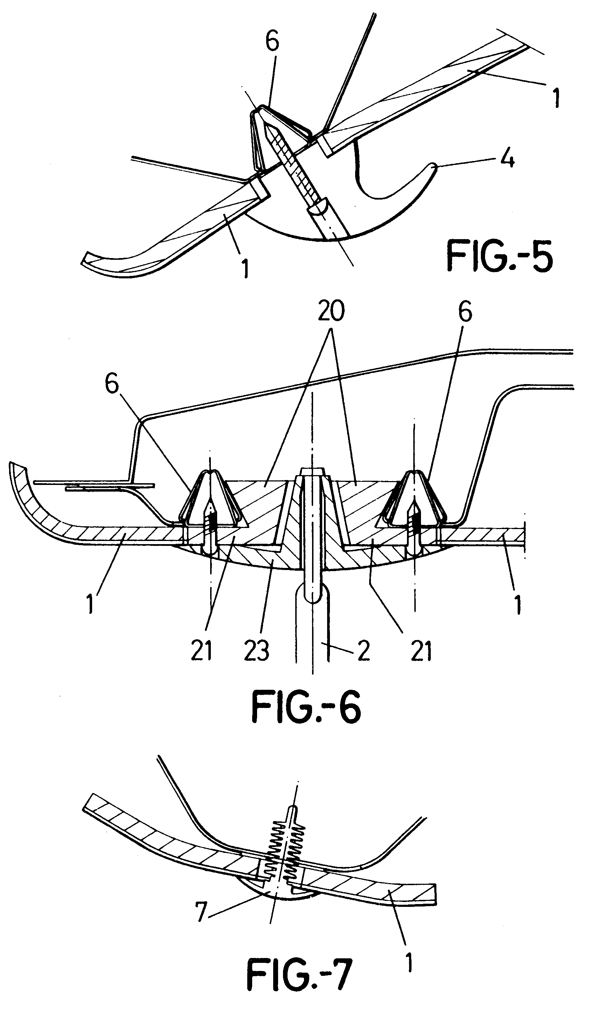

As shown in the figures, the remaining fittings are similarly attached to the packing (1) using operatively designed separating parts and one or two metal clips (6), as required, forming a roof that is provided on one of its faces with all the required fittings, and clips (6) on the other to be fixed to the bodywork. In particular, as shown in figure 6, in order for the turning end of the parasol (23) to be attached, a separating part (20) has been devised to be dovetail-shaped, clips (6) being coupled to its flat ends and moreover having a central hole (22) to locate the turning axis of the parasol.

## Claims

1. Self-supporting roof with built-in fittings directly mountable upon the bodywork of a vehicle roof, in which, onto the packing (1) are preassembled fittings (2), (3) and (4), with the collaboration of clips (6) which are constituted as linkage to the roof, preassembled thus to the inside of the bodywork of the vehicle by snapping said clips (6) into holes provided on the bodywork, the joint being stiffened by the clip-in effect of side wings that the clip (6) is provided with, against the inner edge of the receiving holes, characterized in that each of the the clips (6), which receives the linking screws of the fittings inside a central hole (9) is provided with a flat base (8) and arched supporting and positioning extensions (8') with respect to either separators or directly upon the coupling planes of the fitting, inwardly folded symmetrical projections (10) emerging centrally to define a wedge, the side faces of the wedge having collapsible Wings (11) projecting outwards from the top edges of the projections (10) and leading to rounded free edges, the projections (10) being meant for insertion of each of the clips (6) into the holes of the bodywork, assisted by their wedge shape through said holes, wherein they are held by the wings (11) that prevent their dislocation due to their clip effect.

## Patentansprüche

1. Selbsttragender Dachhimmel mit Aufsatzstücken für die unmittelbare Montage an den Karosserieteil Von Fahrzeugdächem, mit einem Besatz (1), auf dem die Aufsatzstücke (2), (3) und (4) vormontiert sind, und zwar mit Hilfe von Klammern (6), die ein Verbindungsstück des so vormontierten Dachhimmels mit der Karosserieinnenseite des Fahrzeugs darstellen, wobei diese Klammern (6) in an der Karosserie eingearbeitete Öffnungen einrasten und die Verbindung durch den Klippeffekt von an der Klammer (6) angebrachten Seitenflügeln gegen den Innenrand der Einführungstiffnungen versteift wird; dadurch gekennzeichnet, daß jede Klammer (6), in deren zentralen Öffnung (9) die Verbindungsschrauben zu den Aufsatzstücken eingeführt werden, über eine ebene Grundfläche (8) und gebogene Verlängerungen (8' ) verfügt, die zum Aufstützen und Positionieren im Zusammenhang mit Trennstücken bzw. unmittelbar auf die Verbindungsflächen der Aufsatzstücke dienen, sowie über nach innen geknickte symmetrische Vorsprünge (19), die in der Mitte zu einer Keilform aufsteigen, wobei die Seitenflächen des Keils mit klappbaren Flügel (11) versehen sind, die von den oberen Enden der zentralen Vorsprünge (10) aus nach außen gerichtet sind und deren Abschluß frei abgerundete Enden bilden; die genannten Vorsprünge (10) sind für das Einrasten jeder dieser Klammern (6) in ihre jeweilige an der Fahrzeugkarosserie eingearbeitete Öffnung vorgesehen, wobei das Eindringen in die Öffnungen durch die Keilform der Klammern erleichtert wird, die mit Hilfe der klappbaren Flügel (11) durch Klippeffekt dort einrasten.

## Revendications

1. Toit autosupportant avec des pièces rapportées pour le montage direct sur la carrosserie de toits de véhicules, où se trouvent préassemblés avec le garnissage (1) les accessoires (2), (3) et (4), avec la collaboration d'agrafes (6) qui se constituent en liens d'union du toit ainsi préassemblé à la carrosserie intérieure du véhicule, ces agrafes s'encastrant dans des orifices aménagés dans la carrosserie, cette union devenant rigide grâce à l'effet clip d'ailettes latérales incorporées dans l'agrafe (6) contre le bord interne des orifices récepteurs, lequel toit est caractérisé par le fait que chacune des agrafes (6) qui reçoit les vis de fixation des accessoires dans un orifice central (9) dispose d'une base (8) plate, ainsi que de prolongations arquées (8') d'appui et de positionnement par rapport à des séparateurs ou bien directement sur les plans d'accouplement des accessoires, et de projections symétriques (10) repliées vers l'intérieur, lesquelles émergent au centre pour former un coin, les faces latérales de ce coin ayant des ailes rabattables (11) qui se projettent vers l'extérieur à partir des extrémités supérieures des projections centrales (10) et se terminent par des extrémités libres arrondies, ces projections (10) étant prévues pour l'encastrement de chacune des agrafes (6) dans les orifices respectifs prévus sur la carrosserie du véhicule, leur introduction étant facilitée à travers les orifices par la forme de coin des agrafes qui sont maintenues encastrées au moyen des ailes rabattables (11) grâce à l'effet clip.
